# EUROPÄISCHE PATENTSCHRIFT

(11) **EP 3 976 702 B1**
(45) Veröffentlichungstag und Bekanntmachung des Hinweises auf die Patenterteilung: **21.06.2023**
(21) Anmeldenummer: 20726430.0
(22) Anmeldetag: 18.05.2020
(51) Int. Cl.: C08K 5/11, C08K 5/42, C08K 7/22, C08K 3/26, C08K 5/00

(54) **PLASTISOL-ZUSAMMENSETZUNG UMFASSEND EIN GEMISCH AUS UNTERSCHIEDLICHEN WEICHMACHERN**
PLASTISOL COMPOSITION COMPRISING A MIXTURE OF DIFFERENT PLASTICIZERS
COMPOSITION DE PLASTISOL COMPRENANT UN MÉLANGE DE DIFFÉRENTS PLASTIFIANTS

(30) Priorität: 24.05.2019 EP 19176528
(43) Veröffentlichungstag der Anmeldung: 06.04.2022
(73) Patentinhaber: Henkel AG & Co. KGaA, 40589 Düsseldorf (DE)
(72) Erfinder: JOHANN, Wolfgang, 69181 Leimen/Gau-Angerlloch (DE); CARUSO, Alesandro, 69207 Sandhausen (DE); BEDERKE, Nadine, 69226 Nussloch (DE)
(74) Vertreter: dompatent von Kreisler Selting Werner - Partnerschaft von Patent- und Rechtsanwälten mbB
(86) Internationale Anmeldenummer: PCT/EP2020/063840
(87) Internationale Veröffentlichungsnummer: WO 2020/239509

(56) Entgegenhaltungen:
- EP-A1- 0 692 005
- WO-A1-2014/028481
- CN-A- 107 057 213
- VAN OOSTERHOUT J ET AL: "Interactions between PVC and binary or ternary blends of plasticizers. Part I. PVC/plasticizer compatibility", POLYMER, ELSEVIER SCIENCE PUBLISHERS B.V, GB, Bd. 44, Nr. 26, 1. Dezember 2003 (2003-12-01), Seiten 8081-8094, XP027140925, ISSN: 0032-3861 [gefunden am 2003-11-19]

## Beschreibung

Die vorliegende Erfindung betrifft eine Plastisol-Zusammensetzung, die Polyvinylchlorid und ein Gemisch aus unterschiedlichen Weichmachern aufweist sowie deren Verwendung als Unterbodenschutz und zur Nahtabdichtung.

Um den Unterboden von Fahrzeugen, insbesondere Automobilen, gegen Beschädigungen zu schützen, werden die entsprechenden Bereiche mit einem Schutzlack versehen. Gleiches gilt für Schweißnähte, die zum Schutz vor dem Eindringen von Schmutz und Feuchtigkeit mit einer Nahtabdichtungsmasse versehen werden. Diese Maßnahmen erweisen sich aber häufig als unzureichend, wenn bei hohen Fahrgeschwindigkeiten von den Reifen weggeschleuderte Steine, Splitte oder ähnliche Gegenstände auf die Beschichtung auftreffen und diese trotz großer Härte und Dehnbarkeit bis zu dem Unterboden oder der Naht vordringen. Diese oft nur winzigen Schlagstellen bilden Ansatzpunkte für Rost, der sich im Laufe der Zeit auch unterhalb der Schutzlackierung ausbreiten und zu massiven Beschädigungen des Fahrzeugs führen kann.

Gute Erfahrungen wurden mit Schutzbeschichtungen auf Basis von Plastisolen gemacht, also Dispersionen von organischen Kunststoffen in Weichmachern, welche beim Erwärmen auf höhere Temperaturen gelieren und beim Abkühlen aushärten, vor allem bei der Verwendung von Verbindungen auf Basis von Phthalaten als Weichmacher, wobei sich insbesondere Diisononylphthalat (DINP) als gängiger Weichmacher etabliert hat.

WO 2014/028481 offenbart ein Plastisol, bei dem Polyvinylchlorid (PVC), Weichmacher und ein flüssiges Trimethylolpropan-Trimethylacrylat-Harz gemischt sind, wobei das Plastisol eine Härte nach ASTM D2240 von weniger als 12 shore A und eine Bruchdehnung nach ASTM D412 von mehr als 400% aufweist.

Van Ooosterhout et al beschreiben in "Interactions between PVC and binary or ternary blends of plasticizer. Part I PVC/plasticizer compatibility", veröffentlicht in Polymer 44 (2003) 8081-8094, Untersuchungen zu Übergangstemperaturen von fest zu gelartig von Polyvinylchlorid in binären und ternären Weichmachermischungen.

CN 107 057 213 offenbart ein elastisches PVC-Verbundrohr und ein entsprechendes Herstellungsverfahren. Das PVC-Verbundrohr umfasst ein Innenrohr, ein Außenrohr und eine Verstärkungsschicht, die zwischen dem Innenrohr und dem Außenrohr angeordnet ist. Das Innenrohr, das Außenrohr und die Verstärkungsschicht werden aus einer Mischung hergestellt, die unter anderem 40 bis 60 Teile Polyvinylchlorid, 30 bis 40 Teile Dibutylphthalat und 3 bis 5 Teile Diisooctyladipat enthält.

EP 0 692 005 offenbart Beschichtungszusammensetzungen für den Unterbodenschutz und den Schutz gegen Steinschlag bei Motorfahrzeugen, wobei die Zusammensetzung 20 bis 40 Gew.-% PVC-Harz (PVC/PVAc), 1 bis 3 Gew.-% eines Heißquellmittels bestehend aus einem Acrylnitril/Acrylester/Olefin-Copolymer, in dem eine geeignete Menge eines C₄-C₆-Alkans eingekapselt ist, und ein Phenolharz umfasst.

In letzter Zeit sind phthalhaltige Weichmacher allerdings immer wieder aufgrund gesundheitlicher Bedenken in den Fokus geraten und standen kurz davor zumindest in Europa verboten zu werden. Die phthalhaltigen Weichmacher besitzen ein hohes Bioakkumulationspotential und haben sich in Tierversuchen teilweise als chronisch toxisch erwiesen. Auch Reproduktionstoxizität konnte nicht ausgeschlossen werden. Obwohl keine Hinweise auf eine akute Gefährdung beim Menschen vorliegen, darf beispielsweise DINP vorsorglich nicht in Kinderspielzeug eingesetzt werden. Auch wenn DINP weiterhin in Industrieproduktionen eingesetzt werden kann, besteht dennoch der Bedarf nach Schutzbeschichtungen, die frei von phthalhaltigen Verbindungen sind und dennoch als Unterbodenschutz oder zur Nahtabdeckung geeignet sind.

Es ist somit die Aufgabe der vorliegenden Erfindung eine Schutzbeschichtung zur Verfügung zu stellen, die frei von phthalhaltigen Verbindungen ist, die aber trotzdem vergleichbare Eigenschaften wie phthalathaltige Schutzbeschichtungen zeigt und als Unterbodenschutz und zur Nahtabdeckung geeignet ist.

Bei ersten Versuchen die als unbedenklich geltenden Phthale mit einer Alkyl-Kettenlänge von mehr als 11 Kohlenstoffatomen einzusetzen, konnten keine zufriedenstellenden Schutzwirkungen erreicht werden. Versuche, die phthalhaltigen Weichmacher durch solche auf Citrat-Basis zu ersetzten, waren ebenfalls nicht mit Erfolg beschieden, da die Citrat-Verbindungen mit den Kalziumverbindungen in den Formulierungen reagierten, was dazu führte, dass diese Formulierungen instabil wurden.

Im Rahmen der vorliegenden Erfindung wurde nun überraschend gefunden, dass die obige Aufgabe durch eine Plastisol-Zusammensetzung gelöst wird, die ein Gemisch aus unterschiedlichen Weichmachern aufweist.

Daher ist ein erster Gegenstand der vorliegenden Erfindung eine Plastisol-Zusammensetzung, umfassend Polyvinylchlorid und eine Mischung aus Alkansulfonsäurephenylester, Alkandisulfonsäurediphenylester und Di-Octyl-Adipat als Weichmacher.

Es wurde überraschend gefunden, dass durch die Kombination von verschiedenen unbedenklichen Weichmachern wie Alkansulfonsäurephenylester, Alkandisulfonsäurediphenylester und Di-Octyl-Adipat die nötigen Eigenschaften von DINP im Unterbodenschutz und der Nahtabdichtung sehr gut nachgestellt werden können.

Die erfindungsgemäße Plastisol-Zusammensetzung dient als Ersatz für die üblicherweise eingesetzten Zusammensetzungen, die phthalhaltige Weichmacher enthalten. Auf den Einsatz solcher Verbindungen konnte im Rahmen der vorliegenden Erfindung komplett verzichtet werden. Daher ist eine Ausführungsform bevorzugt, in der die erfindungsgemäße Plastisol-Zusammensetzung frei von phthalhaltigen Verbindungen ist.

Um die üblicherweise mit DINP in Verbindung gebrachten Eigenschaften nachzustellen hat es sich als vorteilhaft erwiesen, wenn die Zusammensetzung einen gewissen Mindestanteil an Weichmachern aufweist. Entsprechend ist eine Ausführungsform bevorzugt, in der die erfindungsgemäße Plastisol-Zusammensetzung mindestens 20 Gew.-%, vorzugsweise mindestens 30 Gew.-% an Weichmachern aufweist, jeweils bezogen auf das Gesamtgewicht der Zusammensetzung.

Weiterhin hat es sich als vorteilhaft erwiesen, wenn der erfindungsgemäßen Zusammensetzung neben Alkansulfonsäurephenylester und Di-Octyl-Adipat weiterhin Alkandisulfonsäurediphenylester beigesetzt wird. Daher umfasst erfindungsgemäße Zusammensetzung ebenfalls Alkandisulfonsäurediphenylester.

Bei der Verwendung von phthalhaltigen Verbindungen als Weichmacher haben sich insbesondere solche mit Alkylketten von bis zu 11 Kohlenstoffatomen als vorteilhaft erwiesen. Bei Verwendung längerkettiger Phthalate wurde eine deutliche Abnahme der Schutzwirkung solcher Zusammensetzungen im Unterbodenschutz beobachtet. Im Gegensatz dazu wurde im Rahmen der vorliegenden Erfindung überraschend gefunden, dass die vorteilhaften Eigenschaften der phthalhaltigen Weichmacher insbesondere dann besonders gut nachgestellt werden können, wenn Alkansulfonsäurephenylester und/oder Alkandisulfonsäurediphenylester mit einer Alkyl-Kettenlänge von mehr als 10 Kohlenstoffatomen verwendet werden. Daher ist eine Ausführungsform der vorliegenden Erfindung bevorzugt, in der die Alkansulfonsäurephenylester und/oder Alkandisulfonsäurediphenylester eine Alkyl-Kettenlänge von mindestens 10 Kohlenstoffatomen, vorzugsweise 10 bis 21 Kohlenstoffatome aufweisen.

Es hat sich überraschend gezeigt, dass die Produkteigenschaften der erfindungsgemäßen Zusammensetzung über das Mischungsverhältnis der Weichmacher eingestellt werden können. In einer bevorzugten Ausführungsform beträgt der Anteil an Alkansulfonsäurephenylester in der erfindungsgemäßen Zusammensetzung daher 3 bis 35 Gew.-%, vorzugsweise 7 bis 25 Gew.-%, jeweils bezogen auf das Gesamtgewicht der Zusammensetzung.

Weiterhin bevorzugt ist eine Ausführungsform der erfindungsgemäßen Zusammensetzung, in der der Anteil an Alkandisulfonsäurediphenylester in der Zusammensetzung 0,5 bis 10 Gew.-%, vorzugsweise 1 bis 7 Gew.-% beträgt, jeweils bezogen auf das Gesamtgewicht der Zusammensetzung.

Vorzugsweise liegen die Alkansulfonsäurephenylester und Alkandisulfonsäurediphenylester in der Zusammensetzung in einem Gewichtsverhältnis von 5:1 bis 10:1, vorzugsweise 3:1 bis 7:1 vor.

In einer weiterhin bevorzugten Ausführungsform weist die erfindungsgemäße Zusammensetzung einen Anteil an Di-Octyl-Adipat von 5 bis 40 Gew.-%, vorzugsweise 10 bis 25 Gew.-% auf, jeweils bezogen auf das Gesamtgewicht der Zusammensetzung.

Das Gewichtsverhältnis der Summe von Alkansulfonsäurephenylester und Alkandisulfonsäurediphenylester zu Di-Octyl-Adipat in der erfindungsgemäßen Mischung beträgt vorzugsweise 0,8:1 bis 1:5, besonders bevorzugt 1,2:1 bis 1:2.

Bei der erfindungsgemäßen Plastisol-Zusammensetzung handelt es sich um eine Zusammensetzung auf Basis von Polyvinylchlorid. In einer bevorzugten Ausführungsform beträgt der Anteil an Polyvinylchlorid in der erfindungsgemäßen Zusammensetzung 5 bis 50 Gew.-%, vorzugsweise 10 bis 40 Gew.-%, jeweils bezogen auf das Gesamtgewicht der Zusammensetzung.

In einer besonders bevorzugten Ausführungsform umfasst die erfindungsgemäße Zusammensetzung
- 3 bis 35 Gew.-%, vorzugsweise 7 bis 25 Gew.-% Alkansulfonsäurephenylester;
- 0,5 bis 10 Gew.-%, vorzugsweise 1 bis 7 Gew.-% Alkandisulfonsäurediphenylester;
- 5 bis 40 Gew.-%, vorzugsweise 10 bis 25 Gew.-% Di-Octyl-Adipat; und
- 5 bis 50 Gew.-%, vorzugsweise 10 bis 40 Gew.-% Polyvinylchlorid,
wobei sich die Angaben der Gew.-% jeweils auf das Gesamtgewicht der Zusammensetzung beziehen.

Die erfindungsgemäße Zusammensetzung ist insbesondere als Unterbodenschutz und Nahtabdichtungsmaterial für den Fahrzeugbau ausgelegt. Um die Beschichtungen aufzubringen, werden diese meist versprüht, um dann nach Aushärten den gewünschten Schutzfilm auszubilden. In der Regel liegen diese Zusammensetzungen als Pasten vor und werden unter Druck mittels Düsen versprüht. Daher ist eine Ausführungsform bevorzugt, in der die erfindungsgemäße Zusammensetzung in Form einer Paste vorliegt, die vorzugsweise versprühbar ist.

Um das durch die Schutzbeschichtung verursachte zusätzliche Gewicht zu minimieren, ist es wünschenswert, dass die entsprechenden Zusammensetzungen eine geringe Dichte aufweisen. Eine Reduktion der Dichte kann beispielsweise durch das Einbringen von Mikrohohlkugeln erreicht werden. Daher ist eine Ausführungsform bevorzugt, in der die erfindungsgemäße Zusammensetzung weiterhin Mikrohohlkugeln aufweist, vorzugweise in einer Menge von 0 bis 40 Vol.-%, besonders bevorzugt 5 bis 30 Vol.-%, jeweils bezogen auf das Gesamtvolumen der Zusammensetzung. In der Regel werden Hohlkugeln aus Kunststoff verwendet, die sich durch ihr geringes Eigengewicht auszeichnen. Diese weisen allerdings den Nachteil auf, dass sie teilweise während des Auftragungsprozesses, bei dem die Zusammensetzung unter Druck versprüht wird, komprimiert werden, was dazu führt, dass letztlich mehr Material benötigt wird, um die gewünschte Schichtdicke zu erreichen. Im Rahmen der vorliegenden Erfindung wurde überraschend gefunden, dass dieser Nachteil durch die Verwendung von Hohlkugeln aus Glas ausgeglichen werden kann. Daher ist eine Ausführungsform bevorzugt, in der es sich bei den Hohlkugeln um Glashohlkugeln handelt, vorzugsweise druckstabilisierte Glashohlkugeln.

Um die Eigenschaften und die Verarbeitbarkeit der erfindungsgemäßen Zusammensetzung anzupassen, können dieser weitere Bestandteile hinzugefügt werden, beispielsweise Füllstoffe und/oder Haftvermittler. In einer besonders bevorzugten Ausführungsform weist die erfindungsgemäße Zusammensetzung daher weiterhin Füllstoffe auf, vorzugsweise solche, die ausgewählt sind aus der Gruppe bestehend aus Calciumcarbonat, Calciumoxid, Kieselsäure, Titandioxid, Zinkoxid und Mischungen hiervon.

Die erfindungsgemäße Zusammensetzung ist insbesondere für den Einsatz als Unterbodenschutz und zur Nahtabdichtung ausgelegt. Daher ist ein weiterer Gegenstand der vorliegenden Erfindung die Verwendung der erfindungsgemäßen Zusammensetzung als Unterbodenschutz für Fahrzeuge, insbesondere Automobile, und/oder zur Nahtabdichtung, insbesondere von Schweißnähten.

Die erfindungsgemäße Zusammensetzung wird anhand des folgenden Beispiels näher erläutert, wobei dieses keinesfalls als Einschränkung des Erfindungsgedanken zu verstehen ist.

### Beispiel:

Eine erfindungsgemäße niedrigdichte Zusammensetzung mit den in der Tabelle 1 angegebenen Bestandteilen wurde verschiedenen Tests unterzogen um ihre Geeignetheit insbesondere als Nahtabdichtungsmaterial zu verifizieren. Die Angaben in der Tabelle beziehen sich jeweils auf das Gesamtgewicht der Zusammensetzung.

**Tabelle 1**

| Komponente | Menge [Gew.-%] |
|---|---|
| Alkansulfonsäurephenylester | 16 |
| Alkandisulfonsäurediphenylester | 4 |
| Polyvinylchlorid | 30 |
| Di-Octyl-Adi pat | 17,5 |
| Füllstoffe | 23 |
| Additive | 9,5 |

Die Eigenschaften der erfindungsgemäßen Zusammensetzung wurden nach den in der Automobilindustrie standardisierten Tests durchgeführt, wie im Folgenden beschrieben.

### a) Standfestigkeit / Abrutschverhalten

Die Nahtabdichtungsmasse wird mittels einer Aufziehrakel mit einer Spaltbreite von 80 mm und einer definierten Spalthöhe (Nassschichtdicke) auf ein elektrolytisch verzinktes, KTL-beschichtetes Stahlblech der Größe 100 x 200 mm in Form eines 180 mm langen Streifens parallel zur Längskante des Prüfblechs aufgezogen. Unmittelbar nach dem Aufziehen wird das mit Nahtabdichtungsmasse versehene Prüfblech 20 Minuten bei Raumtemperatur freihängend gelagert. Direkt im Anschluss an die Lagerung bei Raumtemperatur wird das mit Nahtabdichtmasse versehene Blech im Trockner für 5 Minuten einer Temperaturbelastung von 60 °C ausgesetzt. Anschließend erfolgt eine Temperaturbelastung von 140 °C für 20 Minuten. An dem Prüfblech wird dann ausgemessen, ob und wie weit die aufgetragene Nahtabdichtungsmasse von der Unterkante des Prüfblechs abgerutscht ist. Die Abrutschstrecke wird in mm angegeben.

Die Anforderungen an die Standfestigkeit wie sie gemäß DBL 6070 von der Automobilindustrie vorgegeben sind, wurden von der erfindungsgemäßen Zusammensetzung voll erfüllt, das heißt es konnte kein Abrutschen über die Kante festgestellt werden.

### b) Biegefestigkeit

Eine weitere Eigenschaft, die Nahtabdichtungsmassen im Automobilbereich aufweisen müssen, ist eine gewisse Biegefestigkeit, um ein Reißen der Abdichtung bei Belastung zu verhindern. Hier hat sich insbesondere die Biegefestigkeit bei tiefen Temperaturen in der Vergangenheit oft als problematisch erwiesen. Überraschenderweise konnte bei der erfindungsgemäßen Zusammensetzung jedoch auch bei Temperaturen von bis zu -40 °C keine Rissbildung beobachtet werden.

Die Biegefestigkeit wird wie folgt bestimmt:
Die Nahtabdichtungsmasse wird mittels einer Aufziehrakel mit einer Spaltbreite von 50 mm und einer Spalthöhe von 1 mm auf ein elektrolytisch verzinktes, KTL-beschichtetes Stahlblech der Größe 50 mm x 200 mm in Form eines 180 mm langen Streifens parallel zur Längskante des Prüfblechs aufgezogen. Das mit der Nahtabdichtungsmasse versehene Prüfblech wird für 50 Minuten bei 160 °C (Objekttemperatur) getrocknet. Anschließend wird die Biegefestigkeit gemäß DIN EN ISO 1519 über einem 25 mm Dorn bei Raumtemperatur, -20 °C und -40 °C geprüft. Im Fall der erfindungsgemäßen Zusammensetzung konnte bei keiner der Prüftemperaturen eine Rissbildung oder anderweitige Beschädigung des Materialfilms beobachtet werden.

### c) Zugfestigkeit / Bruchdehnung

Die Ermittlung der Zugfestigkeit und Bruchdehnung erfolgt gemäß DIN 53 504 mit einer Einspannlänge von 50 mm und einer Abzugsgeschwindigkeit von 100 mm/min. Im Fall der erfindungsgemäßen Zusammensetzung überstieg die Zugfestigkeit die in der Automobilindustrie geforderten 2,4 MPa deutlich. Auch die geforderte Bruchdehnung von mehr als 180% wurde im Fall der erfindungsgemäßen Zusammensetzung deutlich überschritten, so dass auch bezüglich dieser Eigenschaften die erfindungsgemäße Zusammensetzung die in der Automobilindustrie vorgeschriebenen Anforderungen an Nahtabdichtungsmassen erfüllt.

### d) Überlackierbarkeit

Nahtabdichtungsmaterialien im Automobilbau dienen in der Regel als Basis für weitere Beschichtungen, beispielsweise Lacke. Daher ist es wichtig, dass sie eine gute Überlackierbarkeit aufweisen, also keine Abplatzungen des Decklacks auftreten. Im Zusammenhang mit der erfindungsgemäßen Zusammensetzung wurde weder bei einem konventionellen Aufbau, der sich aus Füller, Wasserbasislack und einem 2K-Klarlack zusammensetzt, noch bei einem integrierten Lackkonzept aus einer ersten Basisbeschichtung, einer zweiten Basisbeschichtung und einem 2K-Klarlack, eine Abplatzung der Deckschicht unter Prüfbedingungen beobachtet.

Zur Überprüfung der Überlackierbarkeit wurde die erfindungsgemäße Zusammensetzung mittels einer Aufziehrakel mit einer Spaltbreite von 80 mm und einer Spalthöhe von 0 bis 3 mm keilförmig auf ein elektrolytisches verzinktes, KTL-beschichtetes Prüfblech in Form eines 180 mm langen Streifens parallel zur Längskante des Prüfblechs aufgetragen. Unmittelbar nach dem Auftragen wurde die Zusammensetzung mit dem jeweiligen Lacksystem versehen und bei Normklima gemäß DIN EN 23 270 mindestens 16 Stunden konditioniert. Nach der Konditionierung wurden die Prüfbleche 240 Stunden im Kondenswasserkonstantklima nach DIN EN ISO 6270-2-CH gelagert. Nach Ablauf der Prüfzeit wurden die Proben mindestens 16 Stunden bei Raumtemperatur konditioniert. Nach Ablauf der Regenerationszeit wurden die Proben der Multisteinschlagprüfung nach DIN EN ISO 20567-1 unterzogen und ausgewertet. Dabei konnten keinerlei Auffälligkeiten, wie beispielsweise ein Abplatzen der Deckschicht, festgestellt werden.

## Patentansprüche

1. Plastisol-Zusammensetzung umfassend Polyvinylchlorid und eine Mischung aus Alkansulfonsäurephenylester, Alkandisulfonsäurediphenylester und Di-Octyl-Adipat als Weichmacher.

2. Plastisol-Zusammensetzung gemäß Anspruch 1, **dadurch gekennzeichnet, dass** die Zusammensetzung frei von phthalhaltigen Verbindungen ist.

3. Plastisol-Zusammensetzung gemäß wenigstens einem der vorangehenden Ansprüche, **dadurch gekennzeichnet, dass** der Gehalt an Weichmachern in der Zusammensetzung mindestens 20 Gew.-%, vorzugsweise mindestens 30 Gew.-% beträgt, bezogen auf das Gesamtgewicht der Zusammensetzung.

4. Plastisol-Zusammensetzung gemäß wenigstens einem der vorangehenden Ansprüche, **dadurch gekennzeichnet, dass** die Alkansulfonsäurephenylester und Alkandisulfonsäurediphenylester in der Zusammensetzung in einem Gewichtsverhältnis von 5:1 bis 10:1, vorzugsweise 3:1 bis 7:1 vorliegen.

5. Plastisol-Zusammensetzung gemäß wenigstens einem der vorangehenden Ansprüche, **dadurch gekennzeichnet, dass** der Alkansulfonsäurephenylester und/oder der Alkandisulfonsäurediphenylester eine Kettenlänge von 10 bis 21 Kohlenstoffatomen aufweisen.

6. Plastisol-Zusammensetzung gemäß wenigstens einem der vorangehenden Ansprüche, **dadurch gekennzeichnet, dass** der Anteil an Alkansulfonsäurephenylester in der Zusammensetzung 3 bis 35 Gew.-%, vorzugsweise 7 bis 25 Gew.-% beträgt, jeweils bezogen auf das Gesamtgewicht der Zusammensetzung.

7. Plastisol-Zusammensetzung gemäß wenigstens einem der vorangehenden Ansprüche, **dadurch gekennzeichnet, dass** der Anteil an Alkandisulfonsäurediphenylester in der Zusammensetzung 0,5 bis 10 Gew.-%, vorzugsweise 1 bis 7 Gew.-% beträgt, bezogen auf das Gesamtgewicht der Zusammensetzung.

8. Plastisol-Zusammensetzung gemäß wenigstens einem der vorangehenden Ansprüche, **dadurch gekennzeichnet, dass** der Anteil an Di-Octyl-Adipat in der Zusammensetzung 5 bis 40 Gew.-%, vorzugsweise 10 bis 25 Gew.-% beträgt, bezogen auf das Gesamtgewicht der Zusammensetzung.

9. Plastisol-Zusammensetzung gemäß wenigstens einem der vorangehenden Ansprüche, **dadurch gekennzeichnet, dass** der Anteil an Polyvinylchlorid in der Zusammensetzung 5 bis 50 Gew.-%, vorzugsweise 10 bis 40 Gew.-% beträgt, jeweils bezogen auf das Gesamtgewicht der Zusammensetzung.

10. Plastisol-Zusammensetzung gemäß wenigstens einem der vorangehenden Ansprüche, **dadurch gekennzeichnet, dass** die Zusammensetzung umfasst:
• 3 bis 35 Gew.-%, vorzugsweise 7 bis 25 Gew.-% Alkansulfonsäurephenylester;
• 0,5 bis 10 Gew.-%, vorzugsweise 1 bis 7 Gew.-% Alkandisulfonsäurediphenylester;
• 5 bis 40 Gew.-%, vorzugsweise 10 bis 25 Gew.-% Di-Octyl-Adipat; und
• 5 bis 50 Gew.-%, vorzugsweise 10 bis 40 Gew.-% Polyvinylchlorid,
wobei sich die Angaben der Gew.-% jeweils auf das Gesamtgewicht der Zusammensetzung beziehen.

11. Plastisol-Zusammensetzung gemäß wenigstens einem der vorangehenden Ansprüche, **dadurch gekennzeichnet, dass** die Zusammensetzung weiterhin Hohlkugel, vorzugsweise Glashohlkugeln, insbesondere druckstabilisierte Glashohlkugeln, umfasst, vorzugsweise in einer Menge von 0 bis 40 Vol.-%, besonders bevorzugt 5 bis 30 Vol.-%, jeweils bezogen auf das Gesamtvolumen der Zusammensetzung.

12. Plastisol-Zusammensetzung gemäß wenigstens einem der vorangehenden Ansprüche, **dadurch gekennzeichnet, dass** die Zusammensetzung in Form einer Paste vorliegt.

13. Plastisol-Zusammensetzung gemäß wenigstens einem der vorangehenden Ansprüche, **dadurch gekennzeichnet, dass** die Zusammensetzung weitere Bestandteile umfasst, insbesondere Füllstoffe und/oder Haftvermittler.

14. Plastisol-Zusammensetzung gemäß Anspruch 13, **dadurch gekennzeichnet, dass** es sich bei den Füllstoffen um solche handelt, die ausgewählt sind aus der Gruppe bestehend aus Calciumcarbonat, Calciumoxid, Kieselsäure, Titandioxid, Zinkoxid und Mischungen hiervon.

15. Verwendung einer Plastisol-Zusammensetzung gemäß wenigstens einem der Ansprüche 1 bis 14 als Unterbodenschutz für Fahrzeuge, insbesondere Automobile, und/oder zur Nahtabdichtung, insbesondere von Schweißnähten.

## Claims

1. A plastisol composition, comprising polyvinyl chloride and a mixture of alkyl sulfonic acid phenyl ester, alkyl disulfonic acid diphenyl ester, and di-octyl adipate as plasticizers.

2. The plastisol composition according to claim 1, **characterized in that** the composition is free from phthalate-containing compounds.

3. The plastisol composition according to at least one of the preceding claims, **characterized in that** the content of plasticizers in the composition is at least 20 wt.%, preferably at least 30 wt.%, based on the total weight of the composition.

4. The plastisol composition according to at least one of the preceding claims, **characterized in that** the alkyl sulfonic acid phenyl ester and alkyl disulfonic acid diphenyl ester are present in the composition in a weight ratio of 5:1 to 10:1, preferably 3:1 to 7:1.

5. The plastisol composition according to at least one of the preceding claims, **characterized in that** the alkyl sulfonic acid phenyl ester and/or the alkyl disulfonic acid diphenyl ester have a chain length of 10 to 21 carbon atoms.

6. The plastisol composition according to at least one of the preceding claims, **characterized in that** the proportion of alkyl sulfonic acid phenyl ester in the composition is 3 to 35 wt.%, preferably 7 to 25 wt.%, based on the total weight of the composition in each case.

7. The plastisol composition according to at least one of the preceding claims, **characterized in that** the proportion of alkyl disulfonic acid diphenyl ester in the composition is 0.5 to 10 wt.%, preferably 1 to 7 wt.%, based on the total weight of the composition.

8. The plastisol composition according to at least one of the preceding claims, **characterized in that** the proportion of di-octyl adipate in the composition is 5 to 40 wt.%, preferably 10 to 25 wt.%, based on the total weight of the composition.

9. The plastisol composition according to at least one of the preceding claims, **characterized in that** the proportion of polyvinyl chloride in the composition is 5 to 50 wt.%, preferably 10 to 40 wt.%, based on the total weight of the composition in each case.

10. The plastisol composition according to at least one of the preceding claims, **characterized in that** the composition comprises:
• 3 to 35 wt.%, preferably 7 to 25 wt.%, alkyl sulfonic acid phenyl ester;
• 0.5 to 10 wt.%, preferably 1 to 7 wt.%, alkyl disulfonic acid diphenyl ester;
• 5 to 40 wt.%, preferably 10 to 25 wt.%, di-octyl adipate; and
• 5 to 50 wt.%, preferably 10 to 40 wt.%, polyvinyl chloride,
the wt.% specifications relating to the total weight of the composition in each case.

11. The plastisol composition according to at least one of the preceding claims, **characterized in that** the composition further comprises hollow spheres, preferably hollow glass spheres, in particular pressure-stabilized hollow glass spheres, preferably in an amount of 0 to 40 vol.%, particularly preferably 5 to 30 vol.%, based on the total volume of the composition in each case.

12. The plastisol composition according to at least one of the preceding claims, **characterized in that** the composition is in the form of a paste.

13. The plastisol composition according to at least one of the preceding claims, **characterized in that** the composition comprises further constituents, in particular fillers and/or adhesion promoters.

14. The plastisol composition according to claim 13, **characterized in that** the fillers are those selected from the group consisting of calcium carbonate, calcium oxide, silicic acid, titanium dioxide, zinc oxide, and mixtures thereof.

15. The use of a plastisol composition according to at least one of claims 1 to 14 as an underbody coating for vehicles, in particular automobiles, and/or for sealing seams, in particular weld seams.

## Revendications

1. Composition de plastisol comprenant du chlorure de polyvinyle et un mélange d'esters phényliques d'acide alcanesulfonique, d'esters diphényliques d'acide alcanedisulfonique et de di-octyl-adipate en tant que plastifiant.

2. Composition de plastisol selon la revendication 1, **caractérisée en ce que** la composition est exempte de composés phtaliques.

3. Composition de plastisol selon au moins l'une quelconque des revendications précédentes, **caractérisée en ce que** la teneur en plastifiants dans la composition est d'au moins 20 % en poids, de préférence d'au moins 30 % en poids, par rapport au poids total de la composition.

4. Composition de plastisol selon au moins l'une quelconque des revendications précédentes, **caractérisée en ce que** les esters phényliques d'acide alcanesulfonique et les esters diphényliques d'acide alcanedisulfonique dans la composition sont présents dans un rapport pondéral de 5:1 à 10:1, de préférence de 3:1 à 7:1.

5. Composition de plastisol selon au moins l'une quelconque des revendications précédentes, **caractérisée en ce que** les esters phényliques d'acide alcanesulfonique et/ou les esters diphényliques d'acide alcanedisulfonique présentent une longueur de chaîne de 10 à 21 atomes de carbone.

6. Composition de plastisol selon au moins l'une quelconque des revendications précédentes, **caractérisée en ce que** la proportion d'esters phényliques d'acide alcanesulfonique dans la composition est de 3 à 35 % en poids, de préférence de 7 à 25 % en poids, respectivement par rapport au poids total de la composition.

7. Composition de plastisol selon au moins l'une quelconque des revendications précédentes, **caractérisée en ce que** la proportion d'esters diphényliques d'acide alcanedisulfonique dans la composition est de 0,5 à 10 % en poids, de préférence de 1 à 7 % en poids, par rapport au poids total de la composition.

8. Composition de plastisol selon au moins l'une quelconque des revendications précédentes, **caractérisée en ce que** la proportion de di-octyl-adipate dans la composition est de 5 à 40 % en poids, de préférence de 10 à 25 % en poids, par rapport au poids total de la composition.

9. Composition de plastisol selon au moins l'une quelconque des revendications précédentes, **caractérisée en ce que** la proportion de chlorure de polyvinyle dans la composition est de 5 à 50 % en poids, de préférence de 10 à 40 % en poids, respectivement par rapport au poids total de la composition.

10. Composition de plastisol selon au moins l'une quelconque des revendications précédentes, **caractérisée en ce que** la composition comprend :
• 3 à 35 % en poids, de préférence 7 à 25 % en poids, d'esters phényliques d'acide alcanesulfonique ;
• 0,5 à 10 % en poids, de préférence 1 à 7 % en poids, d'esters diphényliques d'acide alcanedisulfonique ;
• 5 à 40 % en poids, de préférence 10 à 25 % en poids, de di-octyl-adipate ; et
• 5 à 50 % en poids, de préférence 10 à 40 % en poids, de chlorure de polyvinyle,
les indications de % en poids se rapportant respectivement au poids total de la composition.

11. Composition de plastisol selon au moins l'une quelconque des revendications précédentes, **caractérisée en ce que** la composition comprend en outre des billes creuses, de préférence des biles creuses en verre, en particulier des billes creuses en verre stabilisées par pression, de préférence en une quantité de 0 à 40 % en volume, encore plus préférablement de 5 à 30 % en volume, respectivement par rapport au volume total de la composition.

12. Composition de plastisol selon au moins l'une quelconque des revendications précédentes, **caractérisée en ce que** la composition se présente sous la forme d'une pâte.

13. Composition de plastisol selon au moins l'une quelconque des revendications précédentes, **caractérisée en ce que** la composition comprend d'autres composants, en particulier des matières de charge et/ou des agents adhésifs.

14. Composition de plastisol selon la revendication 13, **caractérisée en ce que** les matières de charge sont des matières choisies dans le groupe constitué par le carbonate de calcium, l'oxyde de calcium, l'acide silicique, le dioxyde de titane, l'oxyde de zinc et leurs mélanges.

15. Utilisation d'une composition de plastisol selon au moins l'une quelconque des revendications 1 à 14 comme protection de plancher pour véhicules, en particulier pour véhicules automobiles, et/ou pour l'étanchéification de joints, en particulier de joints de soudure.
